# DEMANDE DE BREVET EUROPEEN

(11) **EP 1 547 805 A1**
(43) Date de publication de la demande: **29.06.2005**
(21) Numéro de dépôt: 04405790.9
(22) Date de dépôt: 21.12.2004
(51) Int. Cl.: B42D 15/00, G07F 17/42, G07F 7/10, G07F 7/08

(54) **Procédé de génération et de validation de billets imprimables à domicile**

(30) Priorité: 23.12.2003 FR 0315300; 28.06.2004 CH 20041078
(71) Demandeur: Elca Informatique S.A., 1007 Lausanne (CH)
(72) Inventeur: Gorostidi, Daniel, CH-1024 Ecublens (SE); Caraccia, Muriel, CH-1012 Lausanne (SE); Friden, Charles-Paul, CH-1052 lE-Mont-Sur-Lausanne (SE)
(74) Mandataire: Reuteler, Raymond Werner

(57) **Abrégé**

Procédé de génération et de validation de billets comprenant les étapes d'entrée de données dans un système serveur de génération de billets identifiant la transaction sur laquelle le billet se rapporte, de génération d'un fichier d'impression d'une image du billet comprenant un ensemble d'informations uniques spécifiant la transaction dans une partie protégée de l'image et de transmission du fichier d'impression de l'image du billet à un utilisateur. Lors de la génération de l'image du billet, un code de compostage partiel est généré puis stocké dans une base de données du système serveur de génération des billets, ce code de compostage étant lié à des attributs d'image du billet. Lors du compostage du billet, un code de compostage complet est généré et transmis à l'utilisateur sur demande de l'utilisateur, ce code de compostage complet comprenant le code de compostage partiel ainsi qu'un code de compostage supplémentaire fourni lors du compostage.

## Description

La présente invention concerne un procédé de génération et de validation de billets, notamment des titres de transport, des billets d'entrée, des bons d'échange et autres coupons commerciaux.

L'invention concerne notamment un procédé de génération et de validation des divers billets précités, imprimables à domicile ou à d'autres sites sous le contrôle de l'utilisateur.

WO 02/065358 décrit un procédé d'impression d'un billet à domicile, commandé à travers un réseau informatique, tel que le réseau dit "Internet". Le billet est muni d'un code identifiant le billet qui peut être lu uniquement par des moyens électroniques au moment du contrôle du billet. Afin de prévenir un usage multiple du billet ou d'une copie, lors d'un contrôle un reçu est envoyé dans une base de données des billets, de sorte que le billet ne puisse être utilisé qu'une seule fois. Ce système nécessite, d'une part, une lecture électronique du code du billet et, d'autre part, l'accès en ligne à une base de données lors du contrôle afin de vérifier sa validité.

US 5,884,277 décrit un procédé de génération de coupons pour l'achat de produits ou de services à travers un réseau public. Le coupon est généré avec du texte lisible et avec un code chiffré qui nécessite une lecture électronique pour son déchiffrement pour pouvoir être comparé avec les données lisibles sur le coupon. L'utilisateur est en outre muni d'un code personnel (PIN) lié à la transaction du coupon. La protection parvient en particulier du fait que le code personnel de l'utilisateur est intégré dans le code chiffré du coupon. Ce procédé nécessite donc que l'utilisateur ait un code personnel qui sera intégré dans le coupon et qu'il ne devra pas oublier. D'autre part, la lecture et le déchiffrement du code chiffré pour contrôler la validité du coupon doivent se faire nécessairement par des moyens électroniques.

DE 198 23 907 décrit un procédé de génération de billets imprimables par l'utilisateur à domicile. Les utilisateurs doivent être munis d'une carte à puce ou autre carte unique et personnelle à l'utilisateur. Le billet contient une signature électronique sous forme de code-barre. Cette signature électronique contient l'identifiant de la carte personnelle de l'utilisateur. Lors du contrôle, l'utilisateur doit présenter sa carte personnelle ainsi que le billet imprimé. Le dispositif électronique de contrôle vérifie que la signature du billet correspond à la carte personnelle.

EP 1 276 081 décrit un procédé de création de billets pour des événements spécifiques à partir de billets génériques, en apposant un code d'extension au moment de l'achat du billet. Ce code d'extension lie un billet pour un événement spécifique à un billet générique. Les billets génériques doivent être imprimés par des moyens professionnels sur des sites de production spécialisés, avec du papier spécial, des hologrammes ou autres moyens de sécurité contre la contrefaçon. Les billets génériques ne sont pas imprimables en un lieu non protégé, par exemple à domicile, sinon ils pourront simplement être copiés à de multiples exemplaires une fois qu'ils ont été validés, et donc utilisés plusieurs fois. Lors du contrôle, l'utilisateur doit présenter le billet pour l'événement spécifique et le billet générique. Le contrôle du billet nécessite le déchiffrage électronique du code apposé sur le billet de l'événement spécifique afin de déterminer sa validité. Le système électronique vérifie en particulier que le billet pour l'événement spécifique et le billet générique coïncident. Par ailleurs, on ne peut pas savoir si le billet a été utilisé ou non, et s'il pourra être remboursé ou non.

La demande de brevet internationale PCT/IB02/02686 décrit un procédé de génération de billets commandés sur un réseau informatique tel que l'Internet, et imprimables à domicile. Dans la demande précitée, l'image imprimée du billet comprend une structure d'impression dite "microstructure" extrêmement difficile à dupliquer par un fraudeur et qui protège donc contre la génération illicite de faux nouveaux billets. Lors de la création de l'image du billet, des informations concernant la transaction, telles que la date, la destination (pour un titre de transport), ainsi que des informations sur le porteur du billet, telles que son nom, sont directement intégrées dans la microstructure du billet. Chaque billet généré est donc unique, les informations le rendant unique étant directement intégrées dans une microstructure de l'image qui ne peut pas être dissociée de l'image de fond. Il est donc difficile, voire impossible, de régénérer de faux nouveaux billets. L'avantage des billets générés par le procédé décrit dans cette demande par rapport aux procédés décrits auparavant, est qu'ils peuvent êtres contrôlés par des moyens visuels, sans nécessairement avoir recours à des moyens de contrôle électroniques connectés à une base de données en ligne.

Toutefois, l'utilisateur recevant le fichier d'impression sur son ordinateur à domicile ou au bureau, peut imprimer de multiples exemplaires de son billet, ou peut même les photocopier. Du moment où un tel billet est nominatif et concerne une transaction spécifique, ceci ne pose aucun problème puisque le billet n'est utilisable qu'une seule fois. Toutefois, malgré le caractère unique des billets ou autres coupons pouvant être générés par le procédé décrit précédemment, il y a un besoin de pouvoir valider des billets ou de générer un original qui puisse être composté afin de pouvoir déterminer si le billet a été utilisé ou non. Ceci permettra, par exemple, le remboursement de la valeur du billet ou du coupon en cas de non utilisation.

Au vu de ce qui précède, un but de l'invention est de fournir un procédé de génération d'un billet qui peut être contrôlé par des moyens visuels, à travers un réseau global de communication, imprimable à domicile ou à un autre site sous contrôle de l'utilisateur, et de validation ou de compostage du billet afin de permettre par exemple le remboursement ou l'échange du billet non utilisé.

Le but de l'invention est réalisé par un procédé de génération et de validation de billets selon la revendication 1.

Dans la présente invention, le procédé de génération et de validation de billets comprend les étapes
- d'entrée par un utilisateur de données identifiant la transaction sur laquelle le billet se rapporte,
- de transmission de ces données à un système serveur de génération du fichier d'impression du billet,
- de génération d'une image de billet incorporant des données uniques dans une partie protégée contre la duplication, et
- d'envoi du fichier d'impression au poste de l'utilisateur,
les données uniques comprenant une partie d'un code de compostage générée puis stockée dans une base de données du système serveur, l'incorporation de cette partie du code de compostage dans le fichier d'impression du billet se faisant sous forme d'attribut uniquement reconnaissable ou lisible par un contrôleur.

Après l'impression du billet, l'utilisateur doit encore composter son billet s'il souhaite l'utiliser, le compostage comprenant les étapes de communication de données identifiant le billet imprimé au système serveur, la recherche du code de compostage partiel dans une base de données, la génération d'un code de compostage complet comprenant le code de compostage partiel attribué au billet au moment de sa création ainsi qu'un code supplémentaire, et le renvoi à l'utilisateur du code de compostage complet. Le contrôleur peut vérifier ou lire le code de compostage en vérifiant les attributs du billet, la relation entre les attributs du billet et le code de compostage partiel pouvant être indirects et connus seulement par le contrôleur, c'est-à-dire en suivant des règles secrètes. Par exemple, le code de compostage partiel pourrait être déduit de certains chiffres ou indications tels que les aiguilles d'une montre reproduite sur le billet. Comme autre exemple, le code de compostage partiel pourrait être calculé à partir d'informations présentes sur le billet et décrivant son détenteur ou la prestation (p. ex. voyage en train).

Le code de compostage partiel est également avantageusement inclus dans un code barre imprimé sur le billet, ce code barre permettant d'identifier le billet. Les informations contenues dans le code barre sont de préférence chiffrées. Le code-barre est unique mais ne contient pas nécessairement le numéro d'identification que doit saisir l'utilisateur au moment du compostage. Il contient de préférence des informations client et des informations produit ainsi qu'un numéro technique complémentaire garantissant son unicité. Il contient également le code de compostage partiel.

Le contrôleur peut alors être muni d'un lecteur de code barre comportant une clé de déchiffrage. Ceci permet au contrôleur de vérifier le code de compostage partiel avec des moyens électroniques, mais sans être en ligne.

Le code de compostage partiel peut également avantageusement être inclus dans une zone du billet cryptée visuellement selon le procédé de Moiré tel que décrit dans le brevet US 6,249,588, de cryptographie visuelle telle que décrite dans le brevet US 5,488,864 ou de Watermark optique tel que décrit dans la demande de brevet US 2002/0054680.

Le contrôleur peut alors être muni d'une feuille transparente contenant une clé de décryptage visuel appelée révélateur. Le contrôleur peut lire le code de compostage partiel en apposant le révélateur sur la zone cryptée. Le contenu de ce révélateur n'est pas connu de l'acheteur du billet et peut être mis à jour régulièrement pour préserver sa confidentialité.

En résumé, le code de compostage partiel peut être contrôlé de l'une ou plusieurs des façons suivantes :
- En appliquant les règles secrètes qui lient ce code aux attributs du billet
- En utilisant un lecteur de code barre
- En utilisant un révélateur optique

Le code de compostage supplémentaire peut être un chiffre aléatoire, qui est fourni au contrôleur séparément. Ce code supplémentaire peut avantageusement être fourni au contrôleur au moyen d'une grille de contrôle sur un support solide, tel qu'un support sous format de carte de crédit, ou reproduit sur un écran électronique, par exemple d'un appareil portable du contrôleur. De préférence, la lecture pour déterminer le code supplémentaire dans la matrice de la grille suit une règle de lecture dépendant d'informations visibles sur le billet, afin qu'un fraudeur ne puisse pas simplement copier un code d'un billet déjà composté, sans connaître la grille et la règle de lecture qui peuvent varier d'un billet à l'autre.

Le code de compostage complet comprenant le code de compostage partiel et le code de compostage supplémentaire forment un code quasiment unique. L'unicité du code de compostage n'est pas nécessaire car il ne sert pas à identifier un billet. En revanche, les règles de génération de ce code garantissent que la probabilité que deux billets différents aient le même code de compostage soit extrêmement faible. Ainsi, un utilisateur ne pourra pas recopier le code de compostage d'un billet qu'il a déjà composté valablement lors de l'utilisation d'un produit précédent, ni le code de compostage d'un autre utilisateur ayant acheté le même produit.

Par "produit" on entend l'événement ou la transaction auquel le billet se rapporte, par exemple un voyage par train à une destination spécifique et, le cas échéant, pour une date spécifique et une place réservée spécifique.

Lors du compostage, l'utilisateur peut communiquer par différents moyens pour obtenir le code de compostage complet, par exemple par l'envoi d'un SMS avec le numéro d'identification du billet, le code de compostage étant retourné également par SMS sur le portable de l'utilisateur. L'utilisateur pourra également composter son billet depuis son portable au moyen d'un service Wap ou d'une application Java téléchargée au préalable sur son appareil. L'utilisateur peut bien entendu également obtenir ce code à travers un réseau global de communication, tel que le réseau dit "internet".

D'autres buts et aspects avantageux de l'invention ressortiront des revendications, de la description et des dessins annexés, dans lesquels
la Fig. 1 est un schéma illustrant les étapes de génération et de validation d'un billet selon l'invention;
la Fig. 2 est un schéma illustrant notamment les étapes de compostage et de contrôle du billet selon l'invention;
la Fig. 3 est une représentation d'un exemple de billet, dans ce cas un titre de transport, imprimé et composté selon le procédé de l'invention; et
la Fig. 4 illustre une grille de contrôle utilisée par un contrôleur pour vérifier la validité du code de compostage.

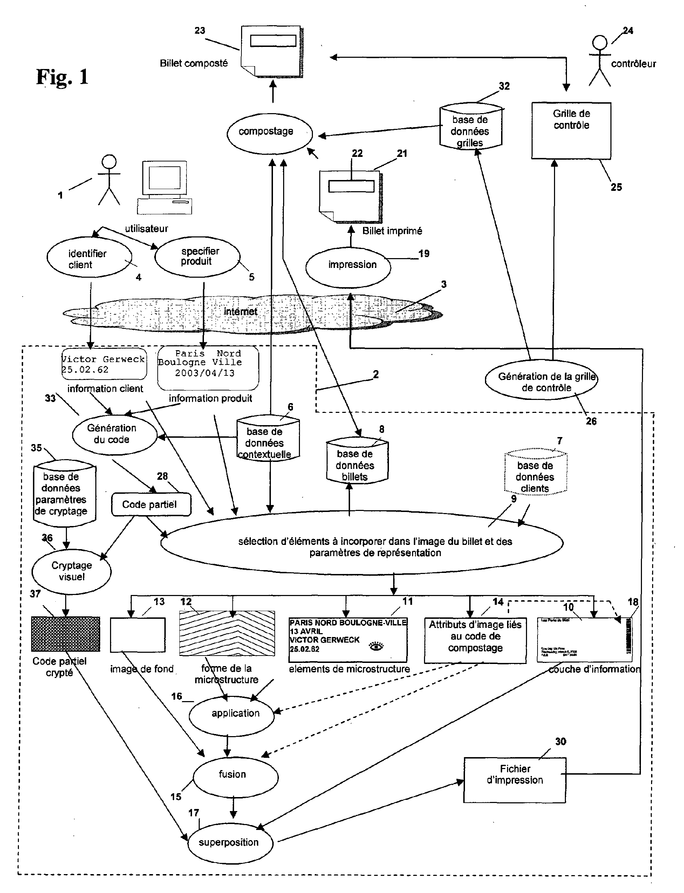

En faisant référence aux Figures, notamment la Fig. 1, un utilisateur 1 désirant acheter un billet, tel qu'un titre de transport ou un billet d'entrée pour un événement, se connecte avec son poste ordinateur à un système serveur de génération de billets 2 à travers un réseau global de communication, tel que le réseau dit "internet" 3. Une fois la communication établie entre l'utilisateur et le système serveur, l'utilisateur fournit des informations afin de permettre son identification 4 et de spécifier 5 le produit qu'il souhaite acheter. Les informations concernant le client et le produit permettent au système serveur d'obtenir des informations supplémentaires éventuelles d'une base de données de clients 7 et d'une base de données contextuelle 6 qui serviront à établir les informations à intégrer dans l'image du billet qui sera produite.

Le système génère le code de compostage partiel 28 en se basant sur les informations client et produit et en appliquant les règles de génération du code contenues dans la base de données contextuelle. Ce code de compostage, qui est associé au billet en cours de génération, est inséré dans la base de données des billets 8.

L'ensemble des informations comprenant le code de compostage, le client, l'image contextuelle et le produit est utilisé pour sélectionner 9 les diverses données utilisées pour la génération de l'image du billet, tel que la couche d'information 10, les éléments de la microstructure 11, les paramètres de déformation de cette microstructure 12, l'image contextuelle ou de fond 13 et les attributs d'images liées au code de compostage partiel 14.

La définition de la microstructure et le procédé de génération de cette microstructure et de sa fusion avec l'image de fond est en elle-même connue et décrite dans la demande de brevet internationale PCT/IB02/02686 et ne sera donc pas décrite plus en détail dans la présente. Les éléments de microstructure 11 sont formés d'une combinaison unique d'éléments incorporant des informations sur le produit et, optionnellement, des informations identifiant le client, de sorte que la microstructure de chaque billet émis est unique. Le fait que cette microstructure unique est fusionnée 15 avec l'image de fond, créant ainsi un fond de billet qui est différent d'un billet à l'autre, permet d'offrir un haut niveau de sécurité contre la reproduction illicite de billets par des fraudeurs. En particulier, le procédé de fusion 15 de la microstructure ne permet pas à un fraudeur de modifier le texte et les images de la microstructure sans détruire l'image du fond. On peut encore effectuer une transformation 16 de la microstructure définie par des paramètres de la formation de l'image 12 afin d'augmenter la difficulté de génération illicite. La transformation peut par exemple définir l'angle d'inclinaison ou la déformation optique des éléments de la microstructure.

Sur l'image avec microstructure, on peut superposer une couche d'information 10 comprenant entre autres des informations identifiant le produit et la personne pour faciliter le contrôle, ces informations étant également, au moins en partie, reproduites dans la microstructure.

La couche d'information peut avantageusement comprendre un code barre 18 reprenant les principales informations client et produit, ces informations étant de préférence chiffrées et comprenant des informations qui sont tout au moins en partie également reproduites dans l'image du billet afin de permettre une comparaison par le contrôleur muni d'un lecteur du code barre, de ces informations avec des éléments de présentation visuels du billet. Ceci permet de contrôler la validité du billet sans nécessiter une communication en ligne entre le lecteur et le système serveur. Ces informations chiffrées permettent également une vérification électronique sûre de la validité du billet avec un lecteur muni de la clé de déchiffrage ou connecté en ligne au système serveur de génération de billets.

Le procédé de cryptage visuel 36 génère la zone cryptée 37 du billet à partir de la base de données des paramètres de cryptage 35 et du code de compostage partiel 28. Cette zone cryptée, qui permet la lecture du code de compostage partiel au moyen d'une clé de cryptage visuel sur une feuille transparente, dite révélateur, est insérée dans l'image du billet par le processus de superposition 17. Le contenu de la base de données des paramètres de cryptage 35 dépend du procédé de cryptage utilisé. Par exemple, dans le cas de l'utilisation du procédé de Moiré, cette base de données peut contenir l'ensemble des fonctions mathématiques utilisables pour déformer simultanément le contenu de la zone cryptée et le motif du révélateur ainsi que l'ensemble de leurs paramètres.

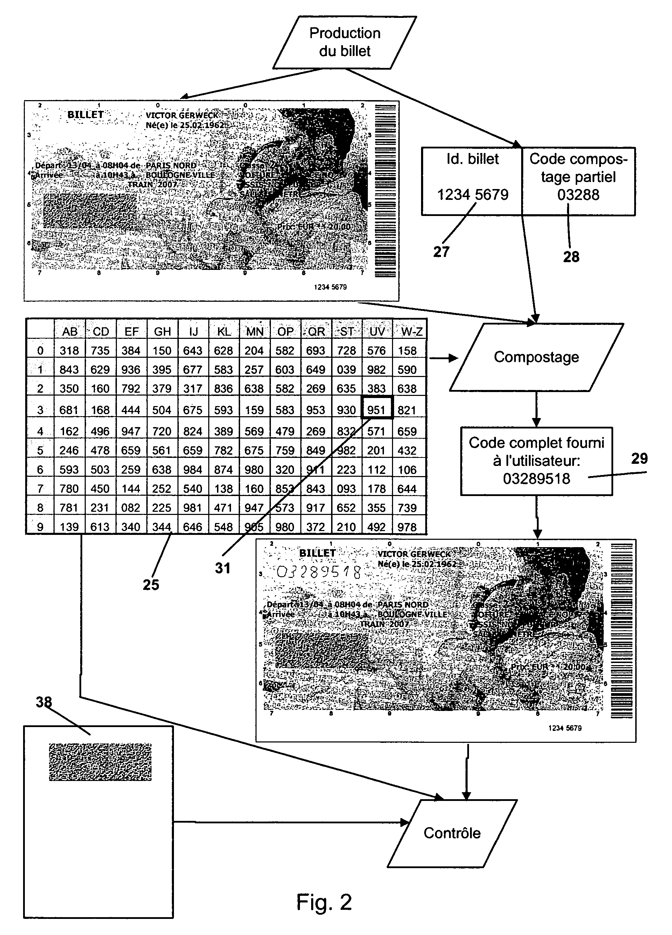

Parmi les paramètres sélectionnés lors de la génération des éléments intégrés dans le billet, est inclus un code de compostage partiel 28, calculé d'après les informations client et produit, ainsi que des règles de calcul stockées dans la base de données contextuelle 6. Dans l'exemple de la figure 2, le code de compostage partiel, dont la valeur est « 03288 », est calculé selon les règles suivantes :
- Le premier et le dernier chiffre sont obtenus en multipliant ensemble les éléments suivants de la date de naissance :
   - 1^{er} chiffre (dizaine) du jour dans le mois
   - 2^{ème} chiffre (unité) du mois dans l'année
   - Dernier chiffre (unité) de l'année
   - 2 * 2 * 2 = 08
- Le deuxième chiffre est déterminé d'après la position, dans le prénom, de la lettre qui est la plus proche alphabétiquement de A. Le « C » de Victor est en 3^{ème} position.
- Le troisième chiffre correspond à la durée du trajet en heures. Le trajet dure 2h 39. La valeur est donc 2.
- Le quatrième chiffre correspond à l'heure de départ du train. Le train part à 8h 04. La valeur est donc 8.

Ce code est ensuite stocké dans une base de données des billets 8 du système serveur 2. Ce code de compostage partiel correspond à une partie du code de compostage complet 29 qui sera finalement rapporté sur le billet par l'utilisateur lors de la validation (ou autrement dit, le compostage) de son billet. Le code de compostage partiel est avantageusement inclus, sous forme chiffrée, dans le code barre 18 pouvant être lu par le contrôleur, notamment en cas de doute lors du contrôle, au moyen d'un lecteur de code barre adapté, mais qui n'est pas nécessairement connecté en ligne avec le système serveur. Le code de compostage partiel peut également être inclus dans une zone cryptée visuellement 37. Il peut alors être lu par le contrôleur au moyen du révélateur 38.

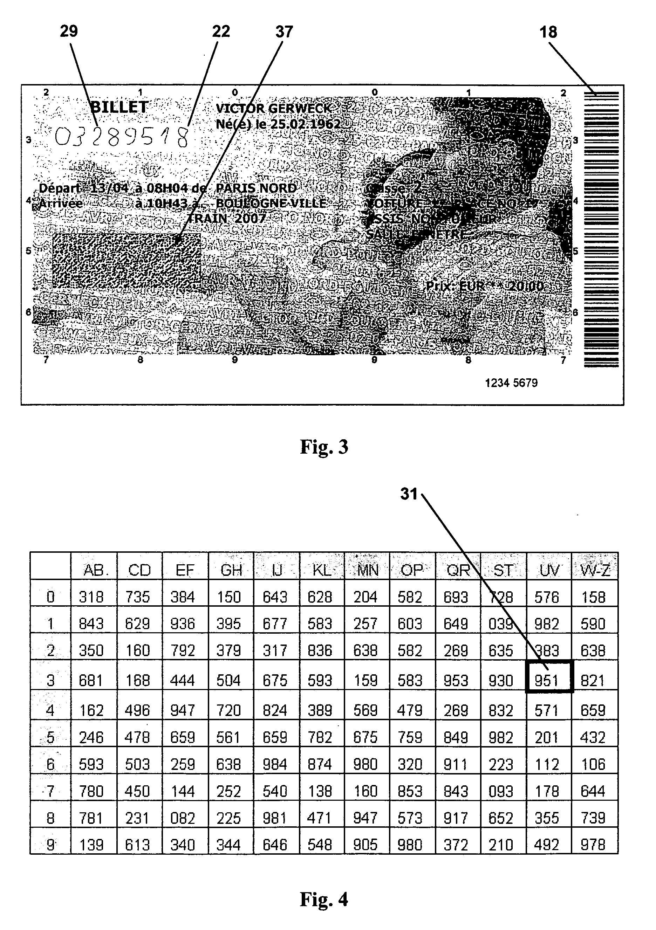

Le code de compostage partiel peut également définir certains attributs, connus par le contrôleur, ces attributs étant représentés par exemple dans la microstructure du billet pour permettre un contrôle visuel rapide du code de compostage. Dans l'exemple de la figure 3, la microstructure contient un clipart situé juste avant le chiffre « 13 ». Le contenu de ce clipart varie en fonction de l'un des chiffres du code de compostage partiel. L'association entre le clipart et le chiffre est uniquement connue du contrôleur.

Le fichier d'impression 30 du billet ainsi généré peut ensuite être envoyé au moyen du réseau global de communication 3 au poste de l'utilisateur 1 qui peut procéder à son impression sur une imprimante standard avec du papier ordinaire. Le billet 21 ainsi imprimé comprend une plage en blanc 22 pour permettre à l'utilisateur d'inscrire le numéro de compostage complet 29.

L'utilisateur valide (composte) son billet en se connectant au système serveur de génération de billets depuis son poste à domicile ou depuis un autre site, par exemple d'un terminal à disposition des utilisateurs à la gare ou au lieu de l'événement. L'utilisateur obtient le code de compostage en identifiant son billet, par exemple au moyen du numéro d'identification unique qui est reproduit sur le billet, le système serveur renvoyant depuis la base de données des billets 8 le code de compostage complet 29 que l'utilisateur inscrit, par exemple à la main, dans la zone blanche 22. Il est également possible que ce code de compostage soit imprimé sur le billet, par exemple par une imprimante à disposition au lieu de l'événement. Le compostage du billet en question est confirmé dans la base de données 8. Un billet composté est considéré comme étant utilisé et ne peut plus être remboursé ou échangé.

Le code de compostage peut également être obtenu au moyen d'autres systèmes de communication, par exemple au moyen du système de téléphonie sans fil, en utilisant par exemple les protocoles SMS ou MMS pour l'envoi du numéro d'identification du billet et la réception du code de compostage sur l'appareil portable (sans) fil de l'utilisateur.

Le code de compostage 29 généré et fourni par la base de données 8 comprend le code de compostage partiel 28 qui est incorporé dans le billet lors de sa génération, ainsi qu'un code supplémentaire 31 fourni lors du compostage. Ce code supplémentaire remplit les fonctions suivantes :
- Il apporte une sécurité supplémentaire car le code de compostage ne peut pas être déduit entièrement du billet imprimé. Cette précaution protège le système contre des compostages illicites dans le cas où les attributs d'images et les règles liés au code de compostage partiel seraient connus du fraudeur.
- Il permet de prendre en compte des informations supplémentaires qui n'étaient pas encore connues au moment de la génération du billet. Par exemple, un utilisateur pourrait acheter un billet de train et décider seulement au moment du compostage de la date de son voyage.

Le code supplémentaire 31 est généré à partir d'une grille stockée dans une base de données 32 et de règles de sélection d'éléments dans la grille stockées dans la base de données contextuelle 6. Par exemple, certains attributs du billet, tels que la date, la transaction ou les données personnelles de l'utilisateur, peuvent être utilisés pour localiser la position (ligne et colonne) du code dans la grille. Dans l'exemple de la figure 2, la colonne de la grille est sélectionnée d'après la 1ère lettre du prénom (colonne « UV ») et la ligne est sélectionnée d'après le 2ème chiffre du jour dans le mois de la date du voyage. La date du voyage est le 13.04.2004, ce qui donne la ligne 3. Le nombre sélectionné dans la grille est donc 951. Ceci n'est qu'un exemple et il est à remarquer que diverses règles de lecture de la grille de contrôle peuvent être utilisées, connues seulement du contrôleur, pour déterminer le code de compostage supplémentaire.

Le contenu de la grille est généré au moyen d'un logiciel séparé 26.

Dans l'exemple montré dans les Figures, le code de compostage complet est constitué par les numéros "03289518" dont le code de compostage partiel est le numéro "03288" et le code supplémentaire "951" est inséré par exemple avant le dernier chiffre du code de compostage partiel. Le code de compostage partiel « 03288 » a été généré au moment de la génération du billet et a été associé à celui-ci. Le code supplémentaire « 951 » a été généré au moment de la demande de compostage par l'utilisateur. Le code complet est uniquement retourné à l'utilisateur au moment de sa demande de compostage. Par conséquent, l'utilisateur perçoit le code de compostage comme un tout et non comme une combinaison de deux éléments. Le positionnement de ce code supplémentaire "951" par rapport au code de compostage partiel, correspond de préférence à une règle connue seulement par le contrôleur, en utilisant de préférence des informations produites sur le billet.

La grille utilisée pour la génération du code supplémentaire est également fournie à un contrôleur 24 sous la forme d'une grille de contrôle 25, par exemple présentée sur un support sous format de carte de crédit ou affichée sur un écran d'un appareil électronique portable du contrôleur. La grille 25 permet au contrôleur de rapidement vérifier une partie du code de compostage en suivant des règles relativement simples. Il est à remarquer que le contenu de la grille est connu du contrôleur, mais pas des utilisateurs, cette grille pouvant être renouvelée avec les codes de compostage supplémentaires, de temps à autre, par exemple chaque mois. Le code de compostage supplémentaire présente une sécurité supplémentaire contre le compostage illicite, car le fraudeur ne connaît pas le contenu de la grille, et de surcroît, ne connaît pas l'élément de la grille qu'il faut reporter sur le billet, cet élément pouvant varier d'un billet à l'autre. Il ne peut donc pas recopier le code d'un autre billet composté sur un billet contrefait ou un billet généré correctement par le système mais pas composté. Pour connaître l'élément de la grille contenant le code de compostage supplémentaire, le contrôleur doit appliquer les mêmes règles que celles déjà utilisées pendant la génération de ce code.

Le code de compostage partiel correspond à certains attributs du billet connu du contrôleur et / ou est associé au code barre qui peut être lu par un lecteur code barre, ce lecteur comprenant une clé de déchiffrage pour lire le numéro associé au code barre. Il peut également être présent sur le billet sous une forme cryptée visuellement. Il peut alors être lu au moyen d'un révélateur.

Dans les exemples décrits, le billet est généré par l'utilisation d'une microstructure selon la demande de brevet internationale PCT/IB02/02686. Toutefois, le procédé de compostage selon l'invention peut être appliqué à d'autres procédés de génération de billets protégés contre la contrefaçon, par exemple en utilisant, au lieu de la microstructure, des techniques de cryptographie visuelles telles que décrites dans la demande US 5,488,664, des techniques de moire telles que décrites dans le brevet US 6,249,588, ou de Watermark optique telles que décrites dans la demande de brevet US 2002/0054680. Dans ces trois dernières techniques de production de documents protégés contre une duplication illicite, le contrôleur nécessite en plus une feuille transparente à apposer sur le billet afin de déchiffrer et lire la partie codée du billet.

## Revendications

1. Procédé de génération et de validation de billets comprenant les étapes
- d'entrée de données dans un système serveur (2) de génération de billets identifiant la transaction sur laquelle le billet se rapporte,
- de génération d'un fichier d'impression (30) d'une image du billet comprenant un ensemble d'informations uniques spécifiant la transaction dans une partie protégée de l'image,
- de transmission du fichier d'impression de l'image du billet à un utilisateur (1),
**caractérisé en ce que**, lors de la génération de l'image du billet, un code de compostage partiel (28) est généré ou obtenu d'une base de données (8) du système serveur, ce code de compostage partiel étant lié à des attributs graphiques ou textuels de l'image du billet, et **en ce que**, lors du compostage du billet, un code de compostage complet comprenant le code de compostage partiel est généré et transmis à l'utilisateur.

2. Procédé selon la revendication 1, **caractérisé en ce que** le code de compostage complet comprend le code de compostage partiel ainsi qu'un code de compostage supplémentaire (31) généré et fourni lors du compostage.

3. Procédé selon la revendication 1 ou 2, **caractérisé en ce que** le code de compostage partiel est également inclus dans le billet sous forme de code barre (18).

4. Procédé selon la revendication précédente, **caractérisé en ce que** les informations contenues dans le code barre sont chiffrées.

5. Procédé selon l'une des revendications 2 à 4, **caractérisé en ce que** le code de compostage supplémentaire est incorporé dans une grille de contrôle fournie au contrôleur.

6. Procédé selon la revendication précédente, **caractérisé en ce que** l'image du billet comprend des informations pour retrouver le code de compostage supplémentaire dans la grille de contrôle en suivant une règle de lecture secrète connue du contrôleur.

7. Procédé selon l'une des revendications précédentes, **caractérisé en ce que** le code de compostage complet est transmis à l'utilisateur au moyen d'un réseau de communication sans fil, tel qu'au moyen du protocole SMS ou MMS ou Wap.

8. Procédé selon l'une des revendications précédentes, **caractérisé en ce que** la partie protégée de l'image du billet comprend une microstructure reproduisant des informations spécifiques à la transaction, cette microstructure étant fusionnée avec une image de fond.

9. Procédé de génération selon l'une des revendications précédentes, **caractérisé en ce que** l'entrée de données dans le système serveur de génération de billets comprend des données (4, 5) transmises par un utilisateur à travers un réseau global de communication (3), tel que le réseau dit "internet", au système serveur de génération de billets (2).

10. Billet imprimable à domicile généré par un procédé selon l'une quelconque des revendications précédentes, le billet comprenant une image protégée lisible par des moyens de contrôle visuels reproduisant des informations uniques spécifiant la transaction à laquelle le billet se rapporte, une plage vide (22) pour l'inscription manuelle d'un code de compostage, et un code barre (18) identifiant le billet.

11. Billet selon la revendication précédente **caractérisé en ce que** le code barre comprend le code de compostage partiel.

12. Billet selon la revendication 10 ou 11, **caractérisé en ce qu'**il comprend une zone (37) cryptée visuellement

13. Billet selon la revendication 12, **caractérisé en ce que** la zone cryptée visuellement comprend le code de compostage partiel, celui-ci pouvant être lu au moyen d'un révélateur.
